# EUROPÄISCHE PATENTSCHRIFT

(11) **EP 0 965 711 B1**
(45) Veröffentlichungstag und Bekanntmachung des Hinweises auf die Patenterteilung: **12.09.2001**
(21) Anmeldenummer: 98110982.0
(22) Anmeldetag: 16.06.1998
(51) Int. Cl.: E05B 51/02, B60J 7/185

(54) **Verschlussvorrichtung für Kraftfahrzeugverdecke**
Latching device for motor vehicle top
Système de verrouillage pour capote de véhicule automobile

(43) Veröffentlichungstag der Anmeldung: 22.12.1999
(60) Teilanmeldung: 00116535.6
(73) Patentinhaber: Dura Convertible Systems GmbH, 50735 Köln (DE)
(72) Erfinder: Farland, David Mac, Dipl.-Ing., 85716 Unterschleissheim (DE)
(74) Vertreter: Strobel, Wolfgang, Dipl.-Ing.

(56) Entgegenhaltungen:
- EP-A- 0 337 983
- EP-A- 0 430 425
- EP-A- 0 657 607
- US-A- 3 296 742

## Beschreibung

Die vorliegende Erfindung betrifft eine Verschlußvorrichtung für Kraftfahrzeugverdecke nach dem Oberbegriff des Anspruchs 1.

Kraftfahrzeugverdecke in Form von faltbaren Verdecken oder Hardtops sind in der Regel im Heckbereich des Fahrzeugs gelagert und an diesem verschwenkbar, wobei sie von einer geschlossenen Verdeckstellung in eine offene Stellung faltbar bzw. schwenkbar sind.

Verdecke weisen in der Regel einen vorderen querverlaufenden Frontspriegel oder eine entsprechende Verstärkungseinrichtung auf, und werden an dem Windlauf der Windschutzscheibe des Fahrzeugs für die Verdeckstellung festgelegt.

Hierzu werden entsprechende Verbindungseinrichtungen zur Festlegung vorgesehen. Eine Verschlußvorrichtung des herkömmlichen Standes der Technik weist eine erste Verbindungseinrichtungauf, die, zur Festlegung des Verdecks am Fahrzeug, einen ersten Schließmechanismus aufweist, und weist weiterhin wenigstens eine zweite Verbindungseinrichtung auf, die im Abstand zur ersten Verbindungseinrichtung angeordnet ist und ein zapfenförmiges Organ sowie ein zur Aufnahme des zapfenförmigen Organs geeignetes Führungsorgan aufweist.

Bei der Verschlußvorrichtung gemäß dem Stand der Technik dient die zweite Verbindungseinrichtung lediglich zum Führen des zapfenförmigen Organs und die erste Verbindungseinrichtung ermöglicht die Verbindung des Verdecks bzw. Hardtops mit dem Fahrzeug.

Nachteilig hierbei ist, daß aufgrund der Verbindung nur an einem Punkt eine wirksame und insbesondere dichte Verbindung des Verdecks mit dem Fahrzeug im Bereich der Oberkante der Frontscheibe nur unzureichend erfolgt, wobei insbesondere bei hohen Geschwindigkeiten aufgrund des entstehenden Luftdrucks sich das Verdeck wieder abheben kann und ein entsprechend großer Luftspalt entsteht, der Außenluft ungehindert eindringen läßt was insbesondere bei schlechter Witterung wie Regen oder Schnee besonders nachteilig ist.

Diese Nachteile werden durch den Stand der Technik gemäß EP 657 607 überwunden. Aus dieser Druckschrift ist eine Verschlußvorrichtung für Kraftfahrzeugverdecke bekannt, die eine erste Verbindungseinrichtung aufweist, die zur Festlegung des Verdecks am Fahrzeug einen ersten Schließmechanismus aufweist. Desweiteren weist die Verschlußvorrichtung zwei Verbindungseinrichtungen auf, die im wesentlichen im gleichen Abstand zur ersten Verbindungseinrichtung angeordnet sind und jeweils ein am Verdeck angebrachtes zapfenförmiges Organ mit einer horizontalen Durchtrittsöffnung und ein zur Aufnahme des zapfenförmigen Organs geeignetes Führungsorgan am Fahrzeug aufweisen. Zwei horizontale Verbindungsstangen, die über eine relativ komplizierte Mechanik mit der ersten Verbindungseinrichtung verbunden sind, dienen zum Eingriff in die horizontalen Durchtrittsöffnungen der zapfenförmigen Organe. Beim Festlegen des Schließmechanismusses der ersten Verbindungseinrichtung wird das Verdeck in Richtung des Fahrzeugs herangezogen, wobei die zapfenförmigen Organe in den Führungsorganen aufgenommen werden und gleichzeitig die Verbindungsstangen nach außen verschoben werden, um in Eingriff mit den Durchtrittsöffnungen zu gelangen und so eine Festlegung des Verdecks an insgesamt drei Punkten zu gewährleisten.

Allerdings können bei der Verschlußvorrichtung gemäß EP 657 607 aufgrund der komplizierten Mechanik leicht Fehler auftreten, die ein sauberes Verschließen des Verdecks verhindern. Vor allem das Einführen der Verbindungsstangen in die Durchtrittsöffnungen der zapfenförmigen Organe ist hierbei besonders anfällig, da das Verdeck äußerst genau am richtigen Ort plaziert sein muß, damit die Verbindungsstangen in die Öffnungen eindringen können. Weisen die Durchtrittsöffnungen hingegen einen größeren Durchmesser auf als die Verbindungsstangen, so geht der erwünschte Effekt einer genauen Festlegung des Verdecks verloren, und das Verdeck beginnt bei hohen Geschwindigkeiten zu wackeln.

Der vorliegenden Erfindung liegt deshalb die Aufgabe zugrunde, eine Verschlußvorrichtung für Kraftfahrzeugverdecke zu schaffen, die die Nachteile des Standes der Technik überwindet, eine einfache und extrem sichere Befestigung des Verdecks am Fahrzeug liefert, die dem Verdeck kein Spiel gibt und somit eine sichere Abdichtung des Verdecks insbesondere auch bei hohen Geschwindigkeiten des Fahrzeugs gewährleistet.

Diese Aufgabe wird durch die Merkmale des Anspruchs 1 gelöst.

Dadurch, daß die wenigstens eine zweite Verbindungseinrichtung einen hülsenförmigen Arretierkörper aufweist, der mittels einer Betätigungseinrichtung in eine Arretier- bzw. Lösestellung des zapfenförmigen Organs relativ zu dem Führungsorgan bewegbar ist, wird gewährleistet, daß das zapfenförmige Organ auf einfache Weise extrem lagesicher festgehalten und leicht wieder freigegeben werden kann.

Vorteilhafterweise sind zwei zweite Verbindungseinrichtungen vorgesehen, zwischen denen, vorzugsweise mittig, die erste Verbindungseinrichtung vorgesehen ist, so daß dadurch eine äußerst stabile Dreipunktverbindung des Verdecks mit dem Fahrzeug ermöglicht wird.

Dabei weisen die beiden zweiten Verbindungseinrichtungen vorteilhafterweise im wesentlichen den gleichen Abstand zur ersten Verbindungseinrichtung auf.

In einer bevorzugten Ausführungsform ist die erste Verbindungseinrichtung am Windlauf des Fahrzeugs angeordnet. Sie kann vorteilhafterweise eine zangenförmige Einhakeinrichtung aufweisen, die durch Drehen einen Zapfen vom Verdeck erfaßt und in eine Verriegelungsstellung führt und arretiert.

Vorteilhafterweise ist die Drehung der Einhakeinrichtung in Verriegelungsstellung mittels eines Stelltriebs steuerbar. Dieser Stelltrieb kann beispielsweise ein Schrittmotor, ein Hydraulikzylinder, ein Pneumatikzylinder sein.

Mit Vorteil ist die Betätigungseinrichtung eine Stange, die an der Einhakeinrichtung angelenkt ist.

Vorteilhafterweise ist durch Betätigen der Stange der hülsenförmige Körper translatorische in eine Arretierstellung bzw. eine Lösestellung bewegbar.

Alternativ hierzu kann durch entsprechende Ausbildung des hülsenförmigen Körpers und entsprechender Arretiereinrichtung in die Arretierstellung bzw. Lösestellung durch Rotation des hülsenförmigen Körpers erfolgen.

Weitere Einzelheiten, Merkmale und Vorteile der Erfindung ergeben sich aus der nachfolgenden Beschreibung unter Bezugnahme auf die Zeichnungen. Darin zeigt:
- Figur 1: eine schematische, teilweise geschnittene Ansicht einer bevorzugten Ausführungsform der erfindungsgemäßen Verschlußvorrichtung in geöffneter Stellung;
- Figur 2: eine analoge Ansicht zu Fig. 1, jedoch mit geschlossener Verschlußvorrichtung.

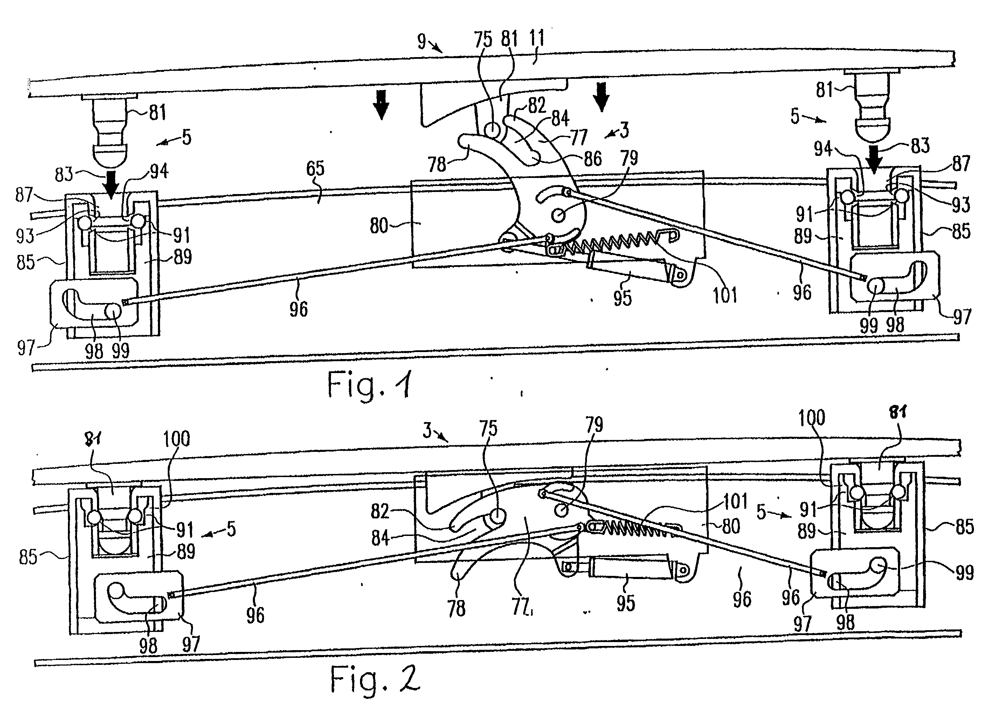

Unter Bezugnahme auf die Figuren 1 und 2 wird nunmehr eine bevorzugk Ausführungsform der erfindungsgemäßen Verschlußvorrichtung für Kraftfahrzeugverdecke beschrieben.

Wie aus Fig. 1 ersichtlich, weist die erfindungsgemäße Verschlußvorrichtung 1 eine erste Verbindungseinrichtung 3 und zwei zweite Verbindungseinrichtungen 5 auf. Am Querspriegel 11 ist ein zapfenförmiges Halteelement 75 vorgesehen, das in Eingriff mit einer zangenförmigen Einhakeinrichtung 77 kommt, die ihrerseits gelenkig über Gelenk 79 und einer Aufnahme 80 an dem Windlauf 65 angeordnet ist, wo hingegen das zapfenförmige Halteelement 75 mittels einem Aufnahmeelement 81 an dem Querspriegel 11 angeordnet ist.

Die beiden zweiten Verbindungseinrichtungen 5 weisen zapfenförmige Organe 81 auf.

In Fig. 1 ist die erfindungsgemäße Verschlußvorrichtung in Öffnungsstellung dargestellt, wobei aus der dargestellten Position heraus der Schließvorgang erfolgen kann.

Hierzu werden die zapfenförmigen Organe 81 gemäß Pfeilen 83 in hülsenförmige Führungsorgane 85 eingeführt, die entsprechende Innenausnehmungen 87 aufweisen. In den hülsenförmigen Führungsorganen sind bewegliche Arretierkörper 89 angeordnet, die mit wenigstens zwei kugelförmigen Arretierelementen 91 zusammenwirken.

Die kugelförmigen Arretierelemente sind in entsprechenden ringförmigen Aufnahmen 93 gehalten. Die Innenausnehmung 87 des hülsenförmigen Führungsorgans weist eine Ringöffnung 94 auf, in die sich die kugelförmigen Arretierelemente 91 teilweise hineinerstrecken können.

Das Zusammenwirken der ersten Verbindungseinrichtung 3 und der zweiten Verbindungseinrichtung 5 erfolgt auf folgende Weise.

Wie aus Fig. 1 ersichtlich, wird das zapfenförmige Halteelement 75 auf den unteren Schenkel 78 der zangenförmigen Einhakeinrichtung 77 gesetzt. Das Verschließen des Verdecks 9 erfolgt sodann im wesentlichen vollautomatisch.

Durch Betätigen eines Stelltriebs 95, beispielsweise eines Hydraulikzylinders, wird die Einhakeinrichtung 77 im Gegenuhrzeigersinn verschwenkt. Dabei kommt das zapfenförmige Halteelement 75 in Eingriff mit einem oberen Schenkel 82 der Einhakeinrichtung 77 und tritt in eine Ausnehmung 84 der Einhakeinrichtung 77 ein.

In Fig. 2 ist die Endstellung der Einhakeinrichtung 77 dargestellt, wobei sich das zapfenförmige Halteelement 75 im inneren Endbereich der Ausnehmung 84 befindet. Die Ausnehmung 84 weist ersichtlich eine Arretierungskrümmung 86 auf.

In den in den Figuren 1 und 2 ausgeführten Ausführungsbeispielen einer bevorzugten Ausführungsform der erfindungsgemäßen Verschlußvorrichtung 1 wird die Verbindung zwischen der ersten Verbindungseinrichtung 3 und den beiden zweiten Verbindungseinrichtungen 5 mittels Verbindungsstangen 96 erzeugt, wobei das Drehen der Einhakeinrichtung 77 eine Längsbewegung der Verbindungsstangen 96 bewirkt.

Die Verbindungsstangen sind einerseits an dem Einhakelement 77 gelenkig gelagert und andererseits an ihrem anderen Ende mit Verschiebeelementen 97 verbunden. Die Verschiebeelemente 97 können beispielsweise plattenförmige Elemente sein, die eine teilweise gekrümmte Ausnehmung 98 aufweisen, in der ein Zapfen 99 des Arretierkörpers 89 eingreift.

Die Verbindungsstangen 96 werden aufgrund der Drehung der Einhakeinrichtung 77 in Richtung zu dieser gezogen, wodurch die Arretierkörper 89 in dem hülsenförmigen Führungsorgan 85 nach oben bewegt werden. Im oberen Abschnitt der Arretierkörper 89 ist eine kegelstumpfförmige Verjüngung 100 vorgesehen, die die kugelförmigen Arretierelemente 91 beim Hinaufbewegen der Arretierkörper 89 nach innen in die ringförmige Öffnung 94 und in Anschlag gegen das zapfenförmige Organ 7 drängt. Dieses wird damit in seiner Lage lagegesichert, und ein Entweichen des zapfenförmigen Organs 7 nach oben wird dadurch verhindert.

Ein Lösen der erfindungsgemäßen Verschlußvorrichtung 1 erfolgt durch Betätigen des Stelltriebs 95 von einer eingezogenen Stellung (Fig. 2) in eine ausgefahrene Stellung (Fig. 1), wobei zur Unterstützung des Einziehvorgangs eine Feder 101 vorgesehen ist, die einerseits an der Aufnahme 80 und andererseits an der Einhakeinrichtung 77 angreift.

Alternativ zur Längsbewegung der Arretierkörper 89 kann auch vorgesehen werden, diese in dem hülsenförmigen Führungsorgan 85 entsprechend zu drehen, wobei entsprechende Laufflächen anstelle der kegelstumpfförmigen Verjüngung 100 vorgesehen sind, die beim Drehen des Arretierkörpers 89 ein Bewegen der kugelförmigen Arretierelemente 91 in Arretierstellung ermöglichen. Beim Rückdrehen der Arretierkörper 89 wird die Arretierstellung wieder gelöst.

Mit der vorliegenden Erfindung wird somit eine einfach aufgebaute Verschlußvorrichtung für Kraftfahrzeugverdecke geschaffen, die eine Mehrpunktverbindung, insbesondere eine Dreipunktverbindung des Verdecks mit dem Fahrzeug schafft, wobei eine besonders stabile Verbindung des Verdecks mit dem Fahrzeug, insbesondere im Bereich des bei hoher Geschwindigkeit stark auftreffenden Luftstromes erreicht wird, so daß eine äußerst kostengünstige stabile Verschlußvorrichtung geschaffen wird.

Die vorliegende Erfindung ist nicht auf die dargestellten Ausführungsbeispiele beschränkt. Beispielsweise kann die mittels Stelltrieb 95 bewirkte Drehung der Einhakeinrichtung 77 rein durch entsprechende Betätigung der Bedienungsperson erfolgen. Andererseits können entsprechende motorische Einrichtungen an den Arretierkörpern angreifen und diese entsprechend ihrer Ausgestaltung verschieben oder drehen, wenn mittels einer entsprechenden Erfassungseinrichtung der Eintritt des zapfenförmigen Halteelements 75 in die Ausnehmung 84 erfaßt wird.

## Patentansprüche

1. Verschlußvorrichtung für Kraftfahrzeugverdecke, mit einer ersten Verbindungseinrichtung (3), die, zur Festlegung eines Verdecks (9) am Fahrzeug, einen ersten Schließmechanismus aufweist,
mit wenigstens einer zweiten Verbindungseinrichtung (5), die im Abstand zur ersten Verbindungseinrichtung (3) angeordnet ist und ein zapfenförmiges Organ (81), das am Verdeck (9) angebracht ist, sowie ein zur Aufnahme des zapfenförmigen Organs geeignetes Führungsorgan (85) aufweist,
wobei die zweite Verbindungseinrichtung (5) eine Verriegelungseinrichtung (89, 91) zur zeitweisen Verriegelung des zapfenförmigen Organs (81) in dem Führungsorgan (85) aufweist und mit dem ersten Schließmechanismus derart verbunden ist, daß bei Festlegen des ersten Schließmechanismus in seine Schießstellung gleichzeitig die Verriegelung des zapfenförmigen Organs (81) erfolgt,
**dadurch gekennzeichnet, daß**
die wenigstens eine zweite Verbindungseinrichtung (5) einen hülsenförmigen Arretierkörper (89) aufweist, der mittels einer Betätigungseinrichtung (96, 97, 99) in eine Arretier- bzw. Lösestellung des zapfenförmigen Organs (81)relatio zu dem Führungsorgan (85) bewegbar ist.

2. Verschlußvorrichtung nach Anspruch 1, **dadurch gekennzeichnet, daß** zwei zweite Verbindungseinrichtungen (5) vorgesehen sind.

3. Verschlußvorrichtung nach Anspruch 2, **dadurch gekennzeichnet, daß** die beiden zweiten Verbindungseinrichtungen (5) im wesentlichen im gleichen Abstand zur ersten Verbindungseinrichtung (3) angeordnet sind.

4. Verschlußvorrichtung nach einem der Ansprüche 1 bis 3, **dadurch gekennzeichnet, daß** die erste Verbindungseinrichtung (3) am Windlauf (65) des Fahrzeugs angeordnet ist.

5. Verschlußvorrichtung nach Anspruch 4, **dadurch gekennzeichnet, daß** die erste Verbindungseinrichtung (3) eine zangenförmige Einhakeinrichtung (77) aufweist, die durch Drehen einen Zapfen (75) am Verdeck erfaßt und in einer Verriegelungsstellung (Fig. 2) arretiert.

6. Verschlußvorrichtung nach Anspruch 5, **dadurch gekennzeichnet, daß** die Drehung der Einhakeinrichtung (77) in Verriegelungsstellung mittels eines Stelltriebs (95) steuerbar ist.

7. Verschlußvorrichtung nach einem der Ansprüche 1 bis 6, **dadurch gekennzeichnet, daß** die Betätigungseinrichtung eine Stange (96) ist, die über eine Betätigungseinrichtung (97) an dem Arretierkörper (89) angelenkt ist.

8. Verschlußvorrichtung nach Anspruch 7, **dadurch gekennzeichnet, daß** durch Betätigen der Stange (96) der Arretierkörper (89) translatorisch in eine Arretierstellung bzw. eine Lösestellung bewegbar ist.

9. Verschlußvorrichtung nach Anspruch 7, **dadurch gekennzeichnet, daß** durch Betätigen der Stange (96) der Arretierkörper (89) rotatorisch in eine Arretierstellung bzw. eine Lösestellung bewegbar ist.

## Claims

1. A locking device for motor vehicle folding tops comprising a first connecting device (3) which, for the fixing of a folding top (9) to the motor vehicle, has a first locking mechanism,
further comprising at least one second connecting device (5) which is positioned at a distance from the first connecting device (3) and comprises a plug-like element (81) positioned at the folding top (9), as well as a guiding element (85) which is suitable as a receptacle for the plug-like element,
wherein the second connecting device (5) comprises a locking device (89, 91) for the temporary locking of the plug-like element (81) in the guiding element (85) and is connected with the first locking mechanism in such a manner that, upon the fixing of the first locking mechanism into its locked position, the locking of the plug-like element (81) is carried out at the same time,
**characterised in that**
the at least one second connecting device (5) comprises a tubular locking body (89) which, by means of an activation device (96, 97, 99), can be moved relative to the guiding element (85) into a locking or releasing position of the plug-like element (81).

2. A locking device in accordance with claim 1, **characterised in that** two second connecting devices (5) are provided.

3. A locking device in accordance with claim 2, **characterised in that** the two second connecting devices (5) are positioned at essentially the same distance from the first connecting device (3).

4. A locking device in accordance with one of the claims 1 to 3, **characterised in that** the first connecting device (3) is positioned on the wind cowl (65) of the motor vehicle.

5. A locking device in accordance with claim 4, **characterised in that** the first connecting device (3) has a clamp-like hooking device (77) which, by means of rotating, engages with a plug (75) on the folding top and locks the plug in a locking position (fig. 2).

6. A locking device in accordance with claim 5, **characterised in that** the rotation of the hooking device (77) into the locking position can be controlled by means of an actuating drive (95).

7. A locking device in accordance with one of the claims 1 to 6, **characterised in that** that the activating device is a rod (96) which is linked with the locking body (89) by means of an activating device (97).

8. A locking device in accordance with claim 7, **characterised in that**, by activation of the rod (96), the locking body (89) can be moved into a locking or a releasing position in a translational manner.

9. A locking device in accordance with claim 7, **characterised in that**, by activation of the rod (96), the locking body (89) can be moved into a locking or a releasing position in a rotational manner.

## Revendications

1. Dispositif de fermeture pour capotes de véhicules automobiles, comportant un premier dispositif de liaison (3), qui, pour maintenir une capote (9) sur le véhicule, possède un premier mécanisme de fermeture,
comportant au moins un deuxième dispositif de liaison (5), disposé à distance du premier dispositif de liaison (3) et comportant un organe en forme de téton (81), monté sur la capote (9), ainsi qu'un organe de guidage (85) approprié pour recevoir l'organe en forme de téton,
dans lequel le deuxième dispositif de liaison (5) comporte un dispositif de verrouillage (89, 91) permettant le verrouillage momentané de l'organe en forme de téton (81) dans l'organe de guidage (85) et qui est assemblé avec le premier mécanisme de fermeture de manière telle que le verrouillage de l'organe en forme de téton (81) s'opère simultanément au verrouillage du premier mécanisme de fermeture dans sa position fermée,
**caractérisé en ce que**
le au moins un deuxième dispositif de liaison (5) comporte un élément de blocage (89) en forme de douille, pouvant être déplacé par rapport à l'organe de guidage (85), au moyen d'un dispositif d'actionnement (96, 97, 99), dans une position de blocage ou de déblocage de l'organe en forme de téton (81).

2. Dispositif de fermeture selon la revendication 1, **caractérisé en ce que** deux deuxièmes dispositifs de liaison (5) sont prévus.

3. Dispositif de fermeture selon la revendication 2, **caractérisé en ce que** les deux deuxièmes dispositifs de liaison (5) sont disposés sensiblement à égale distancé du premier dispositif de liaison (3).

4. Dispositif de fermeture selon l'une des revendications 1 à 3, **caractérisé en ce que** le premier dispositif de liaison (3) est disposé sur l'auvent (65) du véhicule.

5. Dispositif de fermeture selon la revendication 4, caractérisé en ce que- le premier dispositif de liaison (3) présente un dispositif d'accrochage (77) en forme de pince, qui par rotation saisit un téton (75) sur la capote et le bloque dans une position de verrouillage (fig.2).

6. Dispositif de fermeture selon la revendication 5, **caractérisé en ce que** la rotation du dispositif d'accrochage (77) en position de verrouillage peut être commandée au moyen d'un actionneur (95).

7. Dispositif de fermeture selon l'une des revendications 1 à 6, **caractérisé en ce que** le dispositif d'actionnement est une tige (96), qui est articulée sur l'élément de blocage (89) par l'intermédiaire d'un dispositif d'actionnement (97).

8. Dispositif de fermeture selon la revendication 7, **caractérisé en ce qu'**en actionnant la tige (96) il est possible déplacer en translation l'élément de blocage (89) dans une position de blocage ou une position de déblocage.

9. Dispositif de fermeture selon la revendication 7, **caractérisé en ce qu'**en actionnant la tige (96) il est possible déplacer en rotation l'élément de blocage (89) dans une position de blocage ou une position de déblocage.
